(19) Europäisches Patentamt

European Patent Office

Office européen des brevets

(11) **EP 1 042 702 B1**

(12) **EUROPEAN PATENT SPECIFICATION**

(45) Date of publication and mention
of the grant of the patent:
**16.07.2003 Bulletin 2003/29**

(21) Application number: **98960042.4**

(22) Date of filing: **16.12.1998**

(51) Int Cl.⁷: $G02F\ 1/1337$, $G02F\ 1/139$

(86) International application number:
**PCT/GB98/03787**

(87) International publication number:
**WO 99/034251 (08.07.1999 Gazette 1999/27)**

(54) **BISTABLE NEMATIC LIQUID CRYSTAL DEVICE**

BISTABILE NEMATISCHE FLÜSSIGKRISTALLVORRICHTUNG

DISPOSITIF BISTABLE A CRISTAUX LIQUIDES NEMATIQUES

(84) Designated Contracting States:
**AT BE CH DE ES FI FR GB IT LI NL SE**

(30) Priority: **24.12.1997 GB 9727142**

(43) Date of publication of application:
**11.10.2000 Bulletin 2000/41**

(73) Proprietor: **ZBD Displays Limited
Malvern, Worcestershire WR14 3SZ (GB)**

(72) Inventors:
• **JONES, John, Clifford
Malvern, Worcs WR14 3PS (GB)**
• **WOOD, Emma Louise
Malvern, Worcs WR14 3PS (GB)**
• **BRYAN-BROWN, Guy Peter
Malvern, Worcs WR14 3PS (GB)**

(74) Representative: **Bowdery, Anthony Oliver
QinetiQ Ltd
Cody Technology Park
A4 Bldg.,
Ively Road
Farnborough, Hampshire GU14 0LX (GB)**

(56) References cited:
**WO-A-96/24880        WO-A-97/14990**

• **BRYAN-BROWN G P ET AL: "Grating aligned
Bistable Nematic Device" 1997 SID
INTERNATIONAL SYMPOSIUM DIGEST OF
TECHNICAL PAPERS, BOSTON, MAY 13 - 15,
1997, PAPER 5.3, no. VOL. 28, 13 May 1997,
pages 37-40, XP000722653**

EP 1 042 702 B1

## Description

This invention relates to bistable nematic or chiral nematic liquid crystal devices, in particular display devices with a high information content.

Liquid crystal devices typically comprise a thin layer of liquid crystal material contained between optically transparent cell walls. These walls are typically coated on the internal surface with transparent conducting layers to enable external electric fields to be applied, although devices which use in-plane electrodes may use metal strips to achieve this. Some liquid crystal devices also include areas of semiconductor alongside the electrodes designed to form non-linear elements such as thin film transistors (TFTs). The electrodes are often designed to form an x,y matrix of addressable elements or pixels, although other arrangements are possible, including segmented or rθ displays. Although each pixel may be driven by an individual electrode or electrodes, complex devices (i.e. those with a large number of pixels) are usually electrically driven by arranging one substrate to have a series of row electrodes and the other a series of column electrodes so that each pixel is formed at the overlap of the rows and columns.

Other layers may be included on the inside of the device, including colour filters, planarisation and barrier layers. The innermost surface of each pixel usually consists of an alignment layer which gives the required orientation of the liquid crystal director. This surface layer interacts with the molecules which comprise the liquid crystal, and the alignment direction is transmitted to the bulk of the sample through the elastic forces of the liquid crystal material.

For nematic liquid crystals there are a number of possible surface configurations. Certain surfactants cause the director to lie essentially perpendicular to the surface in what is termed "homeotropic" alignment. Alternatively, the director may be essentially parallel to the surface with "planar" alignment, or at some intermediate angle (often called the pretilt) with "tilted" alignment. Devices which use either the planar or tilted alignments usually also require that the degeneracy of alignment directions about the surface normal is removed, and that there is a single orientation of the director.

Various methods have been suggested in the literature to achieve planar homogeneous and tilted homogeneous alignment. For example, oblique evaporation of inorganic layers such as Silicon Monoxide ($SiO_x$) or Magnesium Fluoride (MgF) leads to either planar homogeneous or tilted homogeneous alignment, depending on the processing conditions. Evaporation of SiO at 60° to the surface normal leads to planar alignment in the direction perpendicular to the plane of evaporation, whereas an 85° evaporation angle leads to a tilt (typically about 25° to 30°) in the plane of the evaporation.

Planar or tilted alignment is usually achieved practically by coating the surface with a suitable polymer, such as a polyimide, and buffing with a cloth to impart the desired direction to the surface. This usually leads to a pre-tilt of between 0.1° and 8° from the surface plane, depending on polymer, rubbing conditions and other process conditions including baking temperatures (although tilts of between 0° and 90° are also possible with certain polymers). Alternatively, planar homogenous alignment may be induced using a periodic grating structure in a planar surface. The lowest elastic energy of a nematic liquid crystal then occurs when the director is parallel to the axis of the grating. Tilted homogenous alignment is also possible using a bi-grating surface in which one or both of the superimposed gratings are asymmetric or blazed.

Recently, a number of novel surfaces have been described in which there is more than one stable direction of the nematic director. The first example of a bistable surface was described by Durand *et al* in Patent No. WO 91/11747 (1991) and Patent No. WO 92/00546 (1991). In these devices careful control of the thickness and evaporation of SiO coatings were shown to lead to two stable surface orientations: the first is planar, and the second is at an azimuthal angle (i.e. in the plane of the surface) of 90° to the first orientation but tilted out of the surface plane by approximately 30°. A more practical approach to achieving such azimuthal bistable surface states is described in patent GB. 2,286,467-A. This uses a blazed bi-grating surface in which the local director is planar to the surface and the two surface orientations are stabilised by precise control of the grating pitches, amplitudes and degrees of blaze.

A novel surface was described in British patent application number PCT/GB96/0463, wherein a mono-grating surface with a homeotropic local director orientation leads to two stable states with different tilt angles but within the same azithmuthal plane. This surface is used to form a Zenithal Bistable Device or ZBD. This surface may be achieved either by creating the grating in a layer which leads to a spontaneous homeotropic orientation of the liquid crystal material, or more practically, by over coating the grating surface with a suitable homeotropic inducing alignment agent.

The application of an electric field across a liquid crystal device may have any of a number of effects. Many devices rely on the inherent dielectric anisotropy ($\Delta\varepsilon$) of the liquid crystal ($\Delta\varepsilon = \varepsilon\| - \varepsilon\bot$, where $\|$ and $\bot$ refer to directions parallel and perpendicular to the director). If $\Delta\varepsilon$ is positive then the electro-static energy of the liquid crystal is minimum when the director is parallel to the applied field, whereas if $\Delta\varepsilon$ is negative the director tends to lie perpendicular to the applied field. These effects are related to the RMS. value of the field and as such are independent of the field polarity. Most materials are either positive or negative throughout the frequency range of operation of the device, although certain materials have been designed which exhibit "two-frequency" behaviour, where $\Delta\varepsilon$ is positive at low frequencies and negative at higher frequencies, within the electrical frequency range of operation.

Recently, some devices have been described which use the flexo-electric effect which occurs in many liquid crystals. This effect is caused by polar ordering of the liquid crystal molecules induced by certain elastic distortions of the liquid crystal director field. Such effects are related to the DC field and as such are dependent on the polarity of the applied electric field.

Example of monostable liquid crystal devices which use the preceding principles are the (super)twisted nematic (TN and STN) and electrically controlled birefringence (ECB) modes.

In the TN, both internal surfaces of the devices are treated to give tilted homogeneous (or planar) alignment, but the directions on the opposing surfaces are twisted through an angle to each other. Once filled with a nematic material, the director in the bulk of the device twists from one surface to the other. When illuminated between polarisers, or, if the liquid crystal includes a constituent dichroic dye a single polariser, this structure has a given transmission. When composed of a positive $\Delta\varepsilon$ nematic material the application of an electric field causes the director to reorient parallel to the field thereby changing the optical characteristics of the device. In the TN device, the surfaces are oriented to give typically 90° twist across the cell. The liquid crystal birefringence $\Delta n$ and cell spacing are chosen so that polarisation of the incident light is rotated through 90°, leading to transmission between crossed polarisers (normally white mode) or a dark state between parallel polarisers (normally dark mode). The applied field couples to $\Delta\varepsilon$ inducing tilt in the bulk of the cell and reducing the degree of optical rotation, thereby leading to a darker transmission in the usually white mode, or lighter transmission in normally dark.

The number of different elements that may be addressed in a multiplexed device is related to the steepness of the transmission versus voltage characteristic, as described by Alt and Pleshko in IEEE Trans. ED, Vol ED 21 p146 - 155 (1974). The steepness of this curve may be improved by incorporating a non-linear element such as a TFT at each pixel, or to use the supertwist (STN) effect described in US 4,596, 446. Here a chiral additive is used to change the spontaneous twist of the liquid crystal and lead to twist between 90° and 270°, thereby steepening the transmission / voltage characteristic.

An alternative RMS. addressed, monostable device is the ECB mode. Here a homeotropic surface is used opposite a tilted homogenous surface with a high pretilt from the plane of the surface. This device is used in conjunction with a negative $\Delta\varepsilon$ material so that the application of an electric field reduces the tilt in the bulk of the cell and alters the optical retardation, thereby leading to optical contrast. In each of these devices improvements to the optical properties (primarily contrast, brightness and viewing angle) are possible using additional, passive retardation plates. For example, the STN device may be altered from Blue/White or Yellow/Black modes to a Black/White device using two uniaxial retardation films appropriately oriented with respect to the liquid crystal cell between the polarisers.

An example of a bistable nematic liquid crystal which uses surface bistability is the zenithal bistable device of British patent application number WO97/14990, PCT/GB96/02463 (GB9521106.6); hereinafter +ZBD. One or both surfaces are treated to give two bistable states in the same azimuthal plane but with different zenithal angles (or tilts). In the preferred embodiment of that invention the zenithal bistable surface is used opposite a conventional homeotropic surface and switching occurs due to flexo-electric coupling with an applied field.

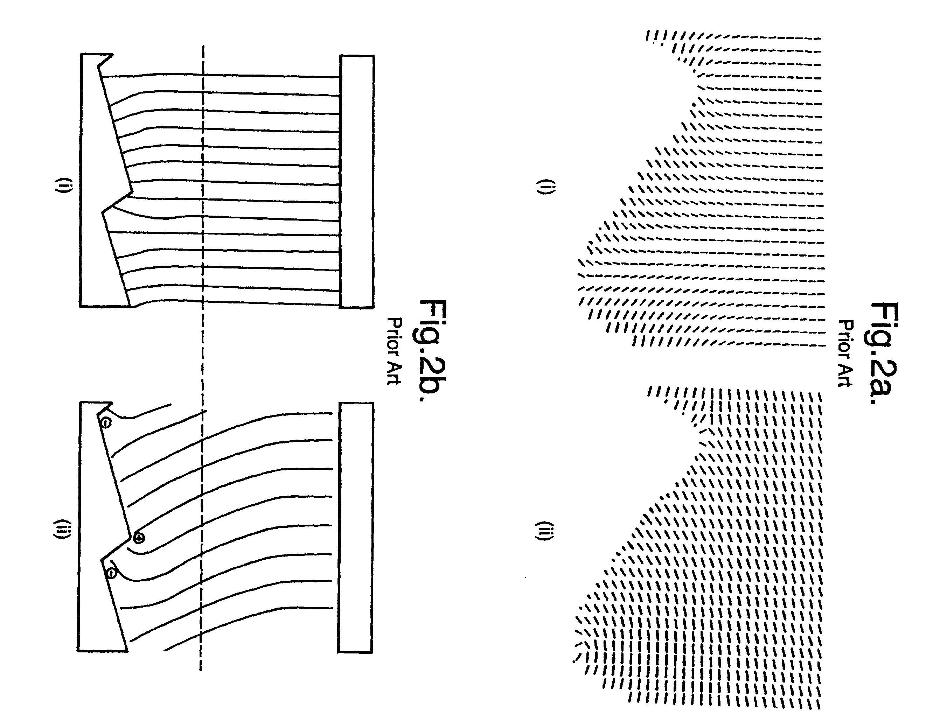

The two states of such a device are shown in Figure 2a. In the first state the bulk of the cell is uniformly homeotropic and the director field distorts continuously close to the grating surface. In the second state, defects occur close to the surface and the director is pretilted uniformly at some distance from the surface (shown by the dotted line in Figure 2b). The near surface distortion in both states leads to a flexoelectric polarisation which selects either state according to the sign of DC electric field. The magnitude of the flexoelectric polarisation close to the surface of either state is enhanced if the material has a positive $\Delta\varepsilon$ since the RMS. effect of the field is to extend the homeotropic alignment from the monostable surface further into the bulk of the cell. This results in lower voltage / faster response for the ZBD. However, the optical contrast is significantly diminished during the application of the data signal due to the RMS. effect stabilising the homeotropic orientation in both states.

The term same azimuthal plane is explained as follows; let the walls of a cell lie in the x,y plane, which means the normal to the cell walls is the z axis. Two pretilt angles in the same azimuthal plane means two different molecular positions in the same x,z plane.

The present invention improves the switching characteristics of the ZBD device to give better contrast ratios and reduced sensitivity to AC voltages resulting from multiplex addressing.

According to this invention a liquid crystal device comprises two cell walls enclosing a layer of nematic or chiral nematic liquid crystal material;

electrode structures on both walls;

a surface alignment means on the facing surfaces of both cell walls in contact with the liquid crystal material and providing alignment of the liquid crystal molecules;

means for distinguishing between the switched states of the liquid crystal material;

CHARACTERISED BY

a liquid crystal material having a zero or negative dielectric anisotropy;

a first surface alignment means on one cell wall that permits the liquid crystal molecules to adopt two different pretilt angles in the bulk of the material adjacent the surface in substantially the same azimuthal plane;

a second surface alignment means on the other cell wall giving either planar homogeneous or tilted homogeneous alignment and a single preferred alignment direction of the liquid crystal molecules, the pretilt value of the tilted alignment being less than 45° to that surface, and the angle between the single alignment direction and the same azimuthal plane associated with the first surface alignment being substantially greater than zero;

the arrangement being such that two stable liquid crystal molecular configurations can exist after suitable electrical signals have been applied to the electrodes, and one of which configurations has a liquid crystal molecular twist across the layer.

The bistable surface is preferably a grooved profile or grating which is made from a material, or is coated by a surfactant, which induces substantially perpendicular alignment of director locally at the surface, and which may lead to different tilts of the director in the bulk of the liquid crystal some distance from that surface along the direction normal to the cell. Typically, the grating has a pitch, amplitude and shape which leads to two different tilts in the bulk of the cell: one of which is substantially perpendicular to the cell plane, and the other tilted somewhat from the cell plane normal through an angle of, for example, between 0° and 60°. The grating is arranged so that the total energy of the two states is substantially the same.

The local orientation of the liquid crystal may be made substantially homeotropic by manufacturing the grating directly into glass or suitable material, but more commonly will involve the coating of the material with a suitable layer. This layer is usually a homeotropic surfactants such as lecithin, silanes, chrome complexes, or long aliphatic side-chain polymers. The grating may be made from any of a number of known methods.. For example, it may be formed in a photo-polymer using a photo-lithographic process or other etching process, by embossing or by transfer from a carrier layer. The grating profile, for example the pitch, amplitude, shape (symmetric or asymmetric), or degree of asymmetry in the shape may vary across each pixel, or from pixel to pixel within the display, or between the pixels and the non-pixelated areas such as the inter-pixel gap. These variations may occur in one direction only, or may occur in both directions on the grating surface.

Other surfaces may be used for the device providing they produce two or more stable states with different pretilts.

The single alignment surface may be any monostable surface which is substantially planar homogeneous, or tilted homogeneous so that the surface induced pretilt is significantly less than the possible pretilts from the zenithal bistable surface, for example between 0.1° and 20° from the cell plane. This is typically a polymer surface rubbed to induce a preferred alignment direction of the liquid crystal director, but equally it could consist of other surfaces used to give planar or tilted homogeneous alignment including obliquely evaporated inorganic material, photo-polymer produced using polarised irradiation, monograting, or bi-grating arrangements.

The azimuthal alignment direction of the bistable surface and that of the single alignment surface may be arranged parallel antiparallel or 90° to one another, or any desired angle between, e.g. 45°. When a non zero twist angle is used, then the nematic material may include an amount of cholesteric material to impart a preferred twist direction. When such cholesteric material is added the twist in the material may exceed 90°, e.g. 180° or 270°. For the case where the bistable surface has tilts greater than zero for both of the stable states, the single (planar) alignment has a lower pretilt than either state of the bistable surface. Where the bistable surface includes a zero tilt state, the opposite surface should be a tilted homogeneous surface (rather than planar homogeneous) with antiparallel alignment to avoid the formation of reverse tilt disclinations; there should be a uniform tilt direction. The same applies for a device having twist across the layer.

The liquid crystal material has a nematic or chiral nematic phase throughout the range of operating temperatures. It has a dielectric anisotropy between zero and -20, preferably $\Delta\varepsilon < -0.1$ in the electrical frequency range of operation, typically between 1Hz and 1 MHz. Preferably the material exhibits the flexoelectric effect common in nematic and cholesteric liquid crystals, although other electrically polar switching mechanisms may be utilised such as chiral ions, or longitudinal ferroelectricity. The material has a suitable value of birefringence $\Delta n$ and/or has a pleochroic dye as a constituent component to enable the different stable states to be discriminated optically (by means of interference, absorption or scattering).

One or both of the cell walls may be formed from an optically transparent medium. This may be a thick non-flexible material such as glass, or one or both cell walls may be formed from a flexible material such a thin layer of glass or plastic, e.g. polyolefin or polypropylene. A plastic cell wall may be embossed on its inner surface to provide the surface alignment grating. The cell may also contain other layers including colour filters, internal polarisers, electrical barrier layers, planarisation layers and other layers commonly used in those skilled in the art of liquid crystal device manufacturer. The cell walls may be spaced either by creation of additional structures, such as polymer walls or columns, or using glass / plastic spacers. The electrodes are optically transparent, and usually formed from indium tin oxide (ITO), but may include additional electrical elements such as non-linear elements (e.g. TFTs) or non-transparent metal lines to reduce track resistance effects.

The invention will now be described, by way of example only with reference to the accompanying drawings of which:

Figure 1a is a plan view of a matrix multiplexed addressed liquid crystal display;

Figure 1b is a cross section of the display of Figure 1;

Figures 2a(i), (ii), 2b(i), (ii) are representations of molecular alignments in the prior art WO97/14990 PCT/GB96/02463;

Figures 3(i), (ii) are schematic representations of a cross-section of the two-dimensional director profile for a negative mode zenithal bistable device according to the present invention in which there are two stable states: the continuous state Figure 3(i) and the defect state Figure 3(ii);

Figure 4 is a schematic of the negative mode zenithal two dimension director profiles of Figure 3 in which the RMS. effect of an applied field which is coupling to the negative dielectric anisotropy of the constituent liquid crystal and concentrating the distortion of the director field closer to the bistable surface;

Figure 5 are a series of one dimensional representations of the electrical switching of the present invention for a material in which $\Delta\varepsilon < 0$, with zero twist across the layer (example 1);

Figures 6 are similar to Figures 5, but for a layer with a 90°twist (example 2);

Figure 7 is a resultant waveform used to test bistable switching of the invention;

Figures 8, 9, and 10 are oscilloscope traces showing the optical response of the device of example 2 below under slightly different conditions;

Figure 11 shows the optical transmission against voltage of the present invention and that of a prior art device for one (a defect state) of the two stable switched states;

Figure 12 shows the optical transmission against voltage of the present invention and that of a prior art device for the other (a nondefect or continuous state) of the two stable switched states;

Figure 13 shows the contrast ratio between the two switched states as a function of RMS. voltage for the present invention and that of a prior art device;

Figure 14 shows switching threshold variation with RMS. voltage for the present invention and that of a prior art device.

Figure 15 is a graph of energy of two pretilt configurations as a function of groove depth to pitch ratio (h/w);

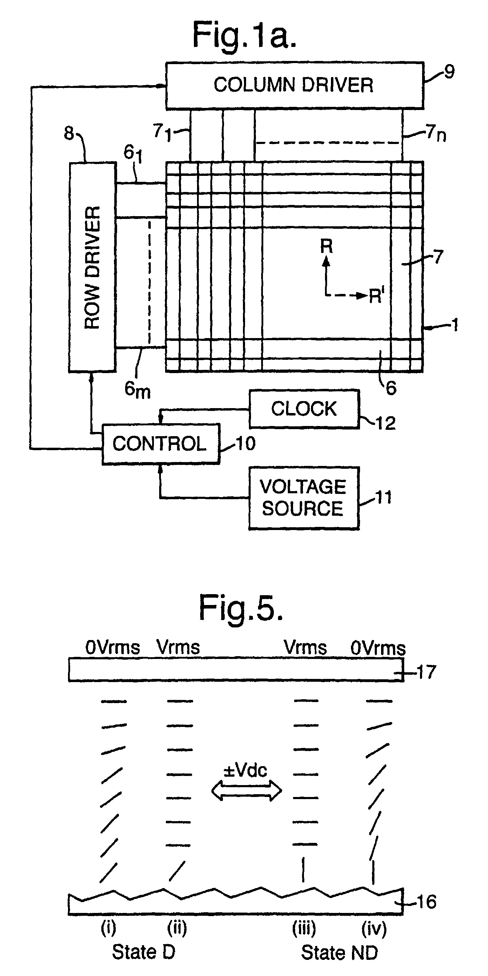

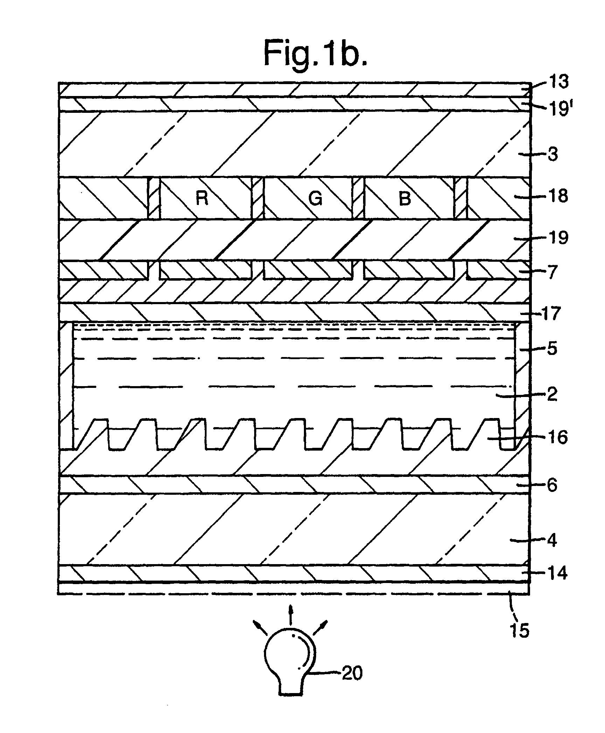

The display in Figures 1a, b comprises a liquid crystal cell 1 formed by a layer 2 of nematic or long pitch cholesteric liquid crystal material contained between glass walls 3, 4. A spacer ring 5 maintains the walls 1-10μm, typically 2-6μm apart. Additionally numerous beads of the same dimensions may be dispersed within the liquid crystal to maintain an accurate wall spacing. Strip like row electrodes 6 e.g. of $SnO_2$ or ITO (indium tin oxide) are formed on one wall 3 and similar column electrodes 7 are formed on the other wall 4. With m-row and n-column electrodes this forms an m×n matrix of addressable elements or pixels. Each pixel is formed by the intersection of a row and column electrode.

A row driver 8 supplies voltage to each row electrode 6. Similarly a column driver 9 supplies voltages to each column electrode 7. Control of applied voltages is from a control logic 10 which receives power from a voltage source 11 and timing from a clock 12.

Either side of the cell 1 are polarisers 13, 14 arranged with their polarisation axis substantially crossed with respect to one another and at an angle of substantially 45° to the alignment directions R, if any, on the adjacent wall 3, 4 as described later for the non twisted case of example 2, or parallel to one alignment direction for the twisted case of example 3. Additionally an optical compensation layer 19' of e.g. stretched polymer may be added adjacent to the liquid crystal layer 2 between cell wall and polariser.

A fully or partly reflecting mirror 15 may be arranged behind the cell 1 together with a light source 20. These allow the display to be seen in reflection and lit from behind in dull ambient lighting. For a transmission device, the mirror 15 may be omitted.

Prior to assembly, the cell wall, 4 is treated with an alignment grating 16 to provide two bistable pretilts. The other wall 3 is treated with a planar treatment 17 i.e. zero or a few degrees of pretilt with an alignment direction. For the case where the bistable grating 16 surface has tilts greater than zero for both of the stable states, the planar alignment 17 has a lower pretilt than either state of the bistable surface. Where the bistable surface includes a zero tilt state, the opposite surface should be a tilted homogeneous surface (rather than planar homogeneous) with antiparallel alignment to avoid the formation of reverse tilt disclinations; there should be a uniform tilt direction. The same applies for a device having twist across the layer 2 as described below with example 2. For a three colour display, a filter layer 18 may be deposited having separate red, green, and blue filter areas in a black matrix

Finally the cell is filled with a negative dielectric anisotropy nematic material e.g. ZLI 4788, ZLI.4415, or MLC. 6608 (Merck).

The zenithal bistable surface grating 16 may be fabricated by the method described in PCT/GB96/02463. For example spin coating a piece of clean, ITO coated glass with a photo-resist (Shipley 1805 at 3000rpm for 30s followed by a 90°C soft bake for 30 minutes - giving 550nm thick coating). A chrome mask with 0.5μm lines and 0.5μm gaps was put into contact with the substrate and obliquely (typically 60° to the substrate/mask normal to give an asymmetric shaped grating or normal for a symmetric shaped grating) illuminated by a 0.8mW/cm$^2$ Mercury lamp for a period of between 200 and 800 seconds. The mask is then removed and the symmetric or asymmetric surface modulation is made by developing in Shipley MF319 for 10s followed by a rinse in de-ionised water. The surface is then hardened by exposure to deep UV (254nm), followed by baking at 160°C for 45 minutes. Finally the surface is treated with a solution of a homeotropic alignment inducing agent such as lecithin.

The molecular (more correctly the director) configuration of a free layer of nematic material on grating surfaces can be calculated. The results are shown in Figures 2a, where the short lines represent liquid crystal director in the vicinity of the grating surface, with the envelope of the short lines at the bottom showing the grating profile. In this case the grating surface has been described by the function;

$$y(x) = \frac{h}{2} \sin\left( \frac{2\pi x}{w} + A \sin\left( \frac{2\pi x}{w} \right) \right) \qquad \ldots\ldots\ldots(2)$$

where h is the groove depth, w is the pitch and A is an asymmetry factor. In Figures 2a(i) and 2b(ii), A=0.5 and h/w=0.6. In Figure 2a(i), the finite element grid has been allowed to relax from an initial director tilt of 80°. In this case the configuration has relaxed to a pretilt of 89.5°. However, if the initial director tilt is set to 30° then the grid relaxes to a pretilt of 23.0° as shown in Figure 2a(ii). Therefore the nematic liquid crystal can adopt two different configurations depending on starting conditions.

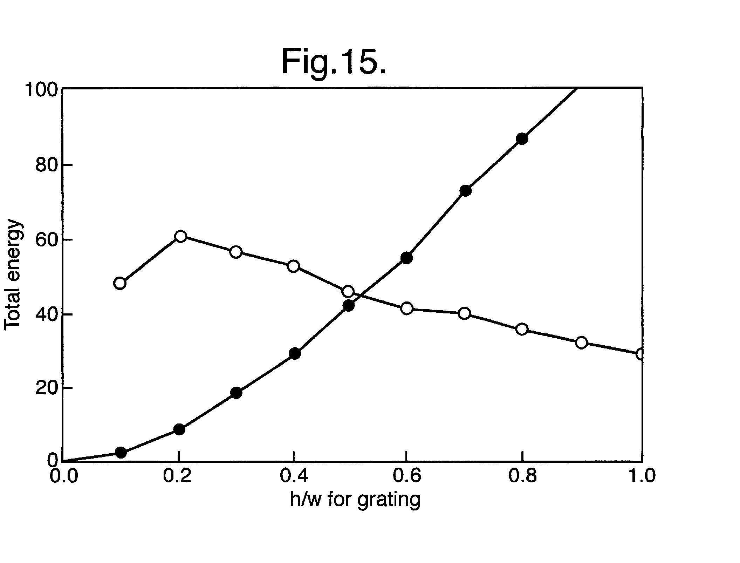

In practice a nematic liquid crystal material will relax to whichever of these two configuration has the lowest overall distortion energy. Figure 15 shows the total energy (arbitrary units) of the high pretilt (solid circles) and the low pretilt (empty circles) state against the groove depth to pitch ratio (h/w). For low h/w, the high pretilt state has the lowest energy and so the nematic will adopt a high pretilt state. Conversely for large h/w, the low pretilt state has the lowest energy and so this state is formed. However when h/w=0.52, the states have the same energy and so either can exist without relaxing into the other. Therefore if a surface is fabricated at, or close to this condition, then bistability can be observed in the pretilt.

Patent application PCT/GB96/02463 describes how a grating manufactured according to the above process may lead to two stable alignments in which the director at some distance from the surface has one of two values of pretilt, depending on whether there are surface defects periodically close to the surface or not; a high pretilt (i) and a low pretilt (ii) as shown in Figure 2a where the lines indicate liquid crystal molecule (director) alignment close to a grating surface. The high pretilt (i) may be termed a continuous or non-defect state and leads to a pretilt close to 90°, whereas the low pretilt (ii) may be termed a defect state and has a pretilt of typically between 0° and 75°, usually about 45° depending on the shape and anchoring properties of the surface and the elastic properties of the liquid crystal.

In PCT/GB96/02463 a device is described where this zenithal bistable surface is used opposite a monostable homeotropic surface. The director profile for the bistable states of this prior art device is shown in Figure 2b where the lines indicate director alignment across the whole liquid crystal layer. There is a net birefringence in the defect state Figure 2b-(ii) which may be lead to transmission of normally incident light when the cell is placed between crossed polarisers at angles other than 0° or 90° to the plane of the director. In the non-defect state Figure 2b-(i), there is little or no net birefringence experienced by normally incident light, and so the device will appear dark. Selection between the two states is made using electric pulses of suitable duration, magnitude and polarity which couple to the dielectric and flexoelectric properties of the liquid crystal. Thus, a bistable display results in which the dark or light states are retained after the removal of the field, stabilised by the grating surface, and insensitive to disruption due to electrical, thermal or mechanical shock. This last advantage is particularly useful for portable displays.

Other prior art bistable liquid crystal devices include those based on ferroelectric liquid crystals. These must be protected from shock because the ferroelectric liquid crystal requires a set thermal treatment to be aligned, and so it will not realign correctly after becoming miss-aligned due to external shock.

The device of the present invention differs from the +ZBD of PCT/GB96/02463 leading to a number of advantages illustrated in the following examples.

PRIOR ART EXAMPLE with asymmetric grating shape. What will be termed a positive mode zenithal bistable nematic device (+ZBD) as described in PCT/GB96/0463 will be described in detail to allow comparison with the results from the device according to the present invention.

A piece of 1.1 mm thick ITO coated glass was spin coated with the photo-resist Shipley 1813 (diluted 3 parts to 1 with an appropriate thinner) at a speed of 2000rpm for 30 seconds. This gave a film thickness of 1.0μm. The surface was then soft baked at 90°C for 30 minutes. A chrome mask was then fixed in dose contact with the photo-resist surface. The mask consisted of 0.5μm chrome lines separated by 0.5μm gaps. The sample was exposed for 530 seconds using an unfiltered mercury lamp (0.3mW/cm$^2$). The exposure was carried out an angle of 60° to the surface normal in the plane perpendicular to that of the intended grating grooves; such angle results in an asymmetric grating shape. Spin development was then done at 800 rpm for 10 seconds using Shipley MF 319, followed by a rinse in de-ionised water. This led to the formation of the grating surface. The photo-resist was then hardened by exposure to deep UV (254nm) followed by a 2 hour bake at 180°C. Finally, the surface was rendered homeotropic by treating with a chrome complex surfactant.

The opposite surface in the positive mode ZBD cell was made by preparing a thinner layer (0.2μm) of Shipley 1805 in a similar manner to the grating surface but without the grating exposure. A cell was formed from one grating surface and one flat surface using an edge seal glue containing 2.5μm glass bead spacers. The cell was filled with the commercial nematic liquid crystal E7 (available from E. Merck, Germany) which has a positive dielectric anisotropy throughout the possible frequency and temperature operating ranges. Switching was facilitated by prior addition of 1% by weight of the material N65 (Norland) as described in patent application GB97/21215.3. For example a N65/E7 mixture was cured for 10 minutes by exposure to unfiltered mercury lamp with an optical output of 2.0mW/cm$^2$ in a fused silica cell prior to filling in the cell. N65 is a UV curing adhesive manufactured by Norland Products Inc., North Brunswick NJ, USA; other similar materials are N63, N60, N123. The materials contain a mixture of esters and acrylate monomers which polymerise under UV radiation. Such a cell gives a weak surface anchoring. Filling was done by capillary action in the isotropic phase followed by slow cooling into the nematic phase.

In devices having a large number of addressable elements or pixels arranged in an x,y matrix it is common to address them by a multiplexing technique. For bistable devices this involves applying a strobe pulse waveform to each row in turn whilst one of two data pulse waveforms (of same shape but inverted polarity) are applied to all column electrodes. Each addressed pixel responds to the resultant of the strobe and data. For test purposes on a single cell, a resultant waveform can be applied to simulate addressing in a large display.

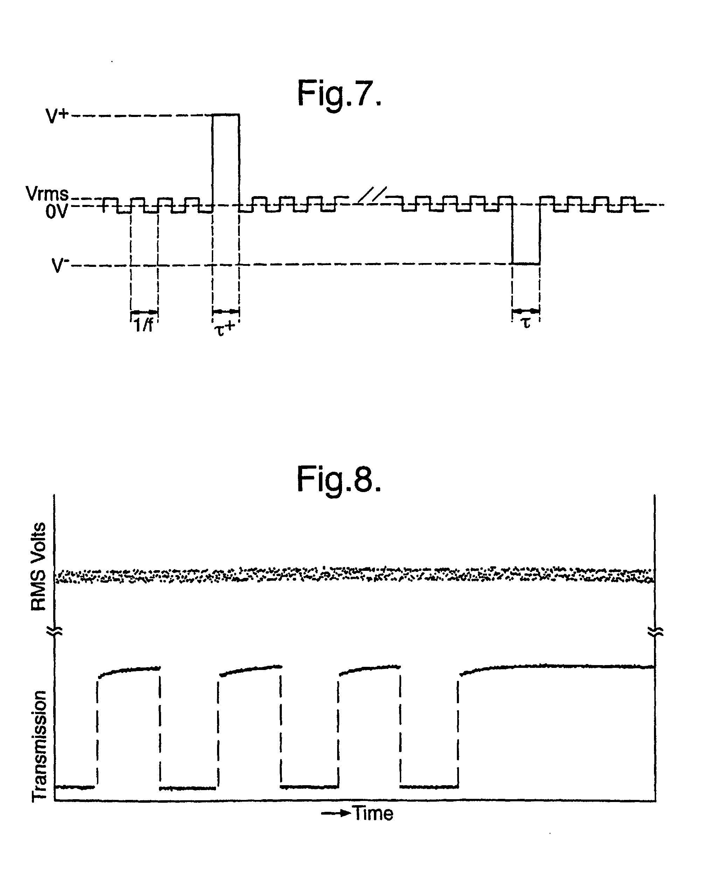

The waveform shown in Figure 7 is such a resultant, and was used to test devices of the prior art and those of the present invention. In this resultant waveform the large pulses originate from the strobe and the smaller pulse originate from the data waveforms. Each pixel will receive an occasional large pulse plus many of the smaller pulses. These smaller pulses apply a continual low value RMS. signal, useful in ferroelectric devices (where they provide AC stabilisation), but can be unwelcome in bistable nematic devices.

Electrical contact was then made to the ITO electrodes of each substrate and the signal shown in Figure 7 applied. This signal was composed of rectilinear pulses of typical duration 0.1 to 10ms and magnitude in the range 10 to 20V. Between 50 to 1 and 500 to 1 duty ratios were used, and an AC waveform of frequency 1kHz to 100kHz and magnitude Vrms (0V to 10V) superimposed. The pulse train applied used either alternating pulses of opposite polarity as shown in Figure 7, or two pulses of the same magnitude, duration and polarity, followed by two different pulses of opposite polarity as given in WO97/14990. Other electrical signals, such as the multiplexing signal used in WO97/14990 could also be used.

The cell was illuminated by a tungsten white light source and viewed between crossed polarisers oriented with the polarisation axes at ±45° to the groove direction on the bistable surface. The optical response was detected using a photo-diode combined with an eye response filter. Bistable latching was found in the nematic phase as described in 9521106.6 and are similar to those of Figures 8, 9, and 10 for the present invention.

Two embodiments of the present invention will now be described in detail.

EXAMPLE 1, asymmetric grating and non-twisted nematic structure.

A 4μm spaced device was constructed using the teaching given above in which the monostable surface 17 had a rubbed polyimide surface (PI32) in which the rubbing direction was perpendicular to the mono-grating grooves 16 on the bistable surface. The material was a negative dielectric anisotropy material ZL1.4788. This device had two stable 2-dimension director profiles illustrated in Figures 3(i), (ii) (when the effect of RMS. coupling is ignored for example by the assumption of $\Delta\varepsilon = 0$ in both cases). This shows that the degree of director distortion is greater for both states in this device than for the conventional device shown in Figure 2; this is particularly true of the non-defect state. Hence, given all other conditions are equal (pretilt of the defect state, flexoelectric and visco-elastic properties of the material, cell spacing etc.) the switching of this device occurs at lower voltages and/or shorter pulse durations. For example, if the bistable state has pretilts stable at 60° and 90° from the cell plane, and the mono-stable surface has 0° pretilt, then the device of Figures 3(i), (ii) has a total of 60° and 90° pretilt change. This is much higher than the angular changes for the two states of the device of WO97/14990 shown in Figures 2a(i), (ii) which are 0° and 30°.

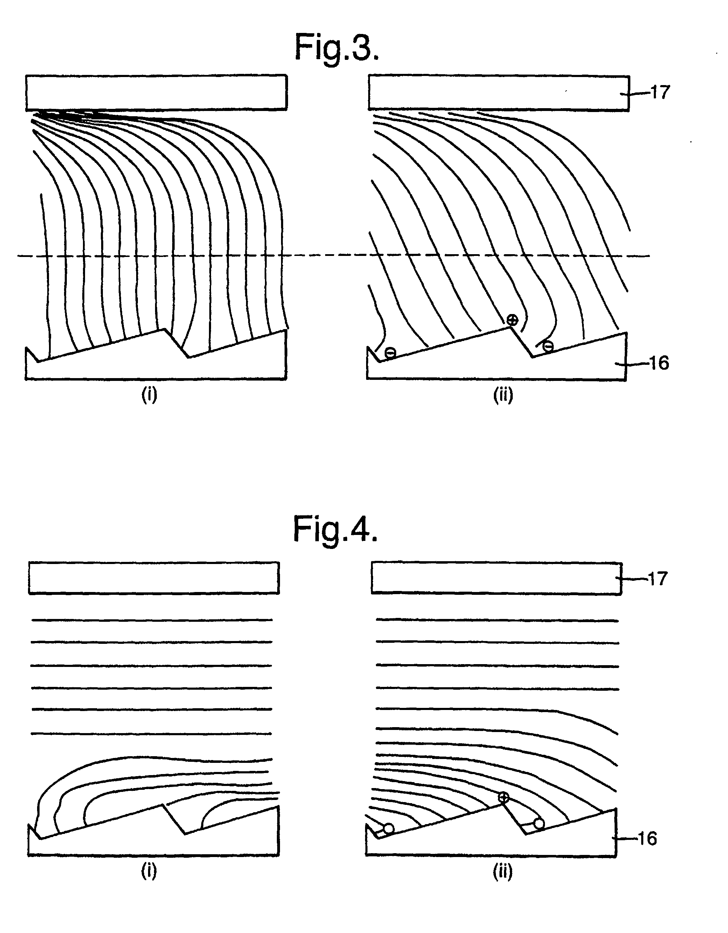

As noted above, in a typical display an amount of RMS. voltage will occur at each pixel and has a significant effect on the director alignments in the two switched states. This is shown in Figures 4(i), (ii) for a device in which $\Delta\epsilon$ is negative (typically equal or between -10 and -0.5). Here the RMS. effect of the applied voltage acts to compress the elastic distortion towards the bistable surface. This serves to increase the magnitude of the flexoelectric polarisation which can couple to the DC component of the applied field and cause switching between the bistable states.

Although this device (example 1) has the potential for faster switching and / or lower voltage operation over that of the conventional ZBD, it also suffers from the same major disadvantage: in a multiplexed device each pixel has an RMS. voltage due to the data waveform on the adjacent columns which is experienced at a pixel before and after the switching time when latching is achieved. This causes the optical difference ($\Delta n_{eff}.d$) to be closer in the two states, and hence lowers the contrast.

The example 1 director alignment in the two switched states, with and without RMS. voltages are shown in Figure 5. This is a series of one-dimensional representations of the electrical switching of the present invention for a material in which $\Delta\epsilon < 0$. From left to right are shown the zero-field defect state, the RMS. effect of the applied field on the defect state, the effect of RMS. voltage on the non-defect state, and the zero-field non-defect state. The arrow represents the DC selection between the two bistable states;

One method employed to improve the contrast is to reduce the magnitude of $\Delta\epsilon$ (i.e. use $\Delta\epsilon \approx 0$) but this dramatically increases the voltage time product required to switch between the two states since it removes the RMS. effect on concentrating the director distortion dose to the bistable surface. This problem is removed in the following example 2 of the present invention.

EXAMPLE 2, symmetric grating and twisted nematic structure.

As with the prior art example 1given above, the grating surface 16 was manufactured by coating ITO glass with Shipley 1813. In this case, however, a different concentration was used so that a spinning speed of 3000 rpm for 30 seconds led to a 1.2μm thickness of photo-resist. After 90°C soft baking for 30 minutes, the same chrome mask as used in the previous example was placed in close contact with the resist but this time the exposure was carried out at normal incidence and for 180 seconds; such normal incidence results in a symmetric shaped grating. The grating surface was then developed, rinsed, hardened and coated in chrome complex using the same conditions as for the counter example.

A 2.8μm spaced cell was then constructed using this zenithal bistable grating surface opposite a rubbed polyimide (PI32 Giba -Geigy) surface. Contrary to example 1, the alignment direction of the monostable polyimide surface was arranged to lie parallel to the grooves of the monograting surface. The cell was filled by capillary action with the nematic liquid crystal ZLI 4788 (available from E. Merck) into which 2% Norland N65 had previously been added and irradiated with UV to reduce surface anchoring energy as described in GB97/21215.3 as above. ZLI 4788 is a nematic material with a room temperature $\Delta\epsilon$ of about -5.7 and a $\Delta n$ of 0.1647.

The two states of this device are described as follows. In the continuous or non-defect state the director close to the zenithal bistable surface is homeotropic, with a pre-tilt of 90°. Away from this surface the pretilt reduces towards that of the polyimide surface (a pretilt of about 2°). The lowest energy state consists of splay/bend deformation only and there is no twist of the director. In the defect state, the director close to the zenithal bistable surface is forced to lie at a pretilt of close to 0° in a plane with the direction perpendicular to the mono-grating grooves. Thus, in the bulk of the cell the component of the director in the plane of the cell twists through an angle of 90° to lie parallel to the rubbing direction at the monostable surface. This state has energies associated with the defects, the splay / bend deformation and the twist deformation. Optimisation of the grating structure coupled with suitable choice of material means that the two possible director profiles have similar energies and the cell is bistable. Tuning of the twist elastic energy, and hence total energy of the twisted state, may also be done using a chiral nematic of suitable pitch and chiral handedness.

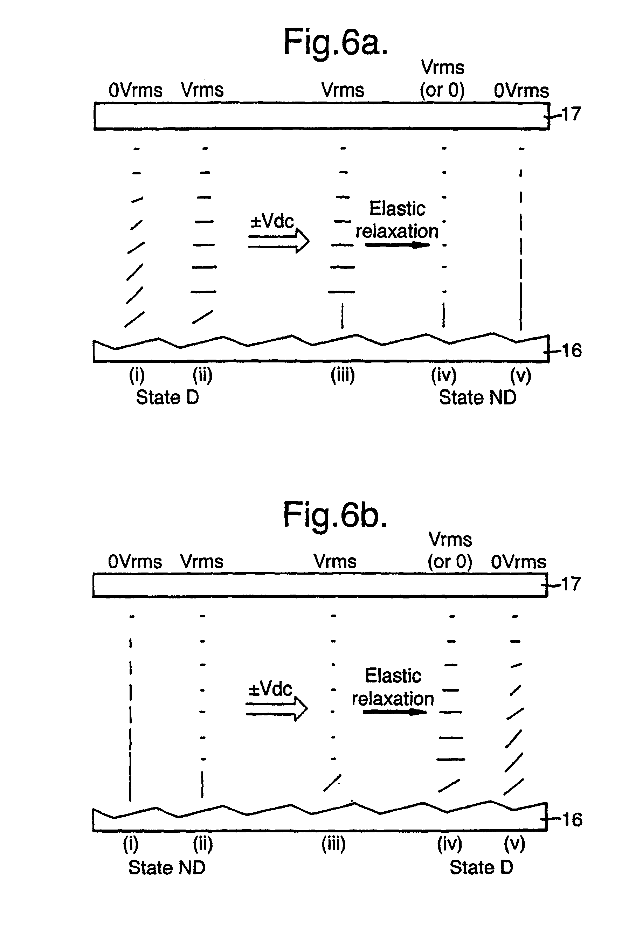

The switching mechanism for this cell is shown schematically in Figures 6a, b. It is very similar to that of example 1 except now there is an additional process associated with the relaxation of the twist when switching between the states. Consider the case of switching from the defect D (i) to non -defect states (iv), (v) shown in Figure 6a). The RMS. effect of the applied field (ii) again acts to concentrate the splay / bend deformation of the director close to the bistable surface. The twist is largely unaffected by this (except for a relatively small effect associated with the elastic anisotropy of typical liquid crystal materials) and remains approximately uniform across the cell. Application of a DC field pulse of the correct polarity couples to the flexoelectric polarisation near the bistable surface and induces (iii) the non-defect homeotropic orientation.

Some time later (the duration of which depends on the total twist angle and the viscoelastic coefficients of the material) the remnant twist in the cell will unwind (iv) since the lowest energy configuration of the non-defect state is untwisted. Once latched at the surface, this process will occur regardless of whether or not the applied field is continued to be applied (v). In the reverse process state Figure 6b, (i) is the same as 6a(v) and application of RMS moves the director to (ii). Application of the appropriate DC pulse causes the flexoelectric switching at the bistable surface and directly induces the twist (iii), which after removal of the DC pulse becomes uniform (iv) then (v) throughout the cell through a similar elastic process to the one described above.

The cell was mounted between crossed polarisers and illuminated by a white light source. The polariser closest to the illumination was arranged to be perpendicular to the groove direction of the first (bistable) surface, such that the incident polarisation is along the in-plane component of the optical axis of the liquid crystal when in the defect state. The analyser (the polariser closest to the detector) was aligned crossed to this and parallel to the rubbing direction of the polymer surface. This is similar to the normally white mode of a twisted nematic liquid crystal device.

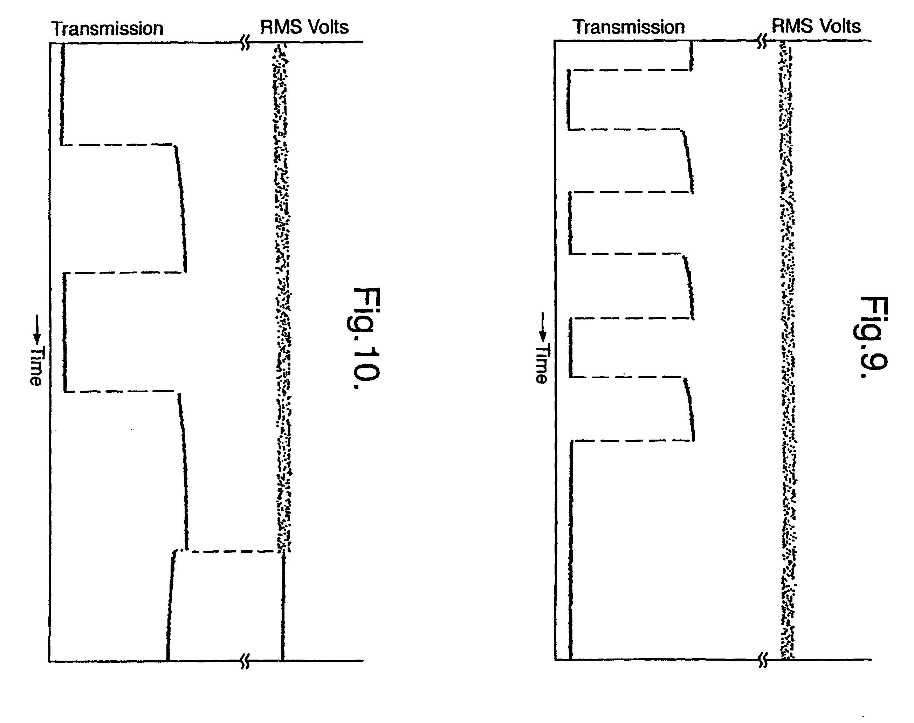

The electrical signal of Figure 7 was then applied and the optical response of the twisted negative mode zenithal bistable device is shown in Figures 8 to 10, where the lower trace shows optical transmission against time and the upper trace an applied RMS signal. Pulses of 10ms at +28V and -10.5V cause latching between the defect and continuous states, respectively. A duty cycle of 200:1 was used during which a 3Vrms 1kHz square wave was applied. Latching between the defect (transmissive) and continuous (dark) states was achieved, and either state retained when pulses were no longer supplied, as indicated in Figures 8 and 9. Moreover, removal of the applied AC waveform caused a slight drop in the transmission of the transmissive state due to the change in tilt across the cell, as shown in Figure 10.

This device has two great advantages over that of example 1. Firstly, the optical contrast and wavelength range that is possible in the twisted state is vastly improved, being very similar to that of the conventional twisted nematic TN mode. Tuning of the device optical properties to operate in the first or second Gooch / Tarry minimum will lead to high brightness, high contrast ratio between Black and White States. This may be approximated by:

$$T = \{1 - \sin^2\beta/(1+\alpha^2)\}$$

where $\beta = 90°\sqrt{(1+\alpha^2)}$ and $\alpha = 2\Delta n_{eff}.d / \lambda$ where the effective birefringence $\Delta n_{eff}$ is scaled to account for the average tilt $\zeta$ across the cell:

$$\Delta n_{eff} = n_o\left(\frac{n_e}{\sqrt{n_o^2\cos^2\zeta + n_e^2\sin^2\zeta}} - 1\right)$$

By ensuring that the twisted state operates close to the minima where $\beta = p\ 180°$ (p = 1, 2, 3, 4 ....) it is possible to get black and white states by using a 90° twist without the use of additional retardation plates. Optimising the light state transmission (hence brightness and contrast ratio) may be done for either with or without an applied AC field by fine tuning the optical retardation (i.e. $\Delta n_{eff}.d$) of the device. In example 2 the results suggest that the material is closer to a Gooch / Tarry minimum with the AC waveform applied. The second major advantage is that good optical contrast and brightness are retained even when there is a significant RMS. voltage across the cell, such as during multiplexing.

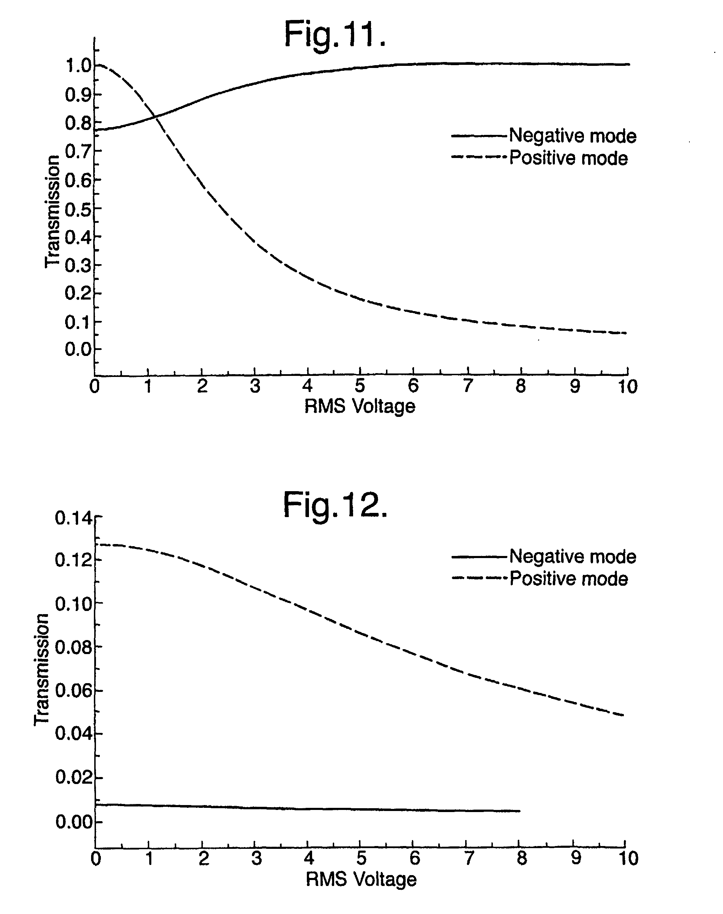

These advantages are apparent in the comparison of the switching results for the twisted negative mode device of example 2 with those of the conventional positive mode device given in the counter example. Results for the defect state transmission versus the applied RMS, voltage are given in Figure 11, whereas Figure 12 shows the transmission of the continuous state. In both cases the results are compared to those of the positive mode ZBD described in the counter example, where the transmission levels are normalised with respect to the maximum transmission achieved in each device.

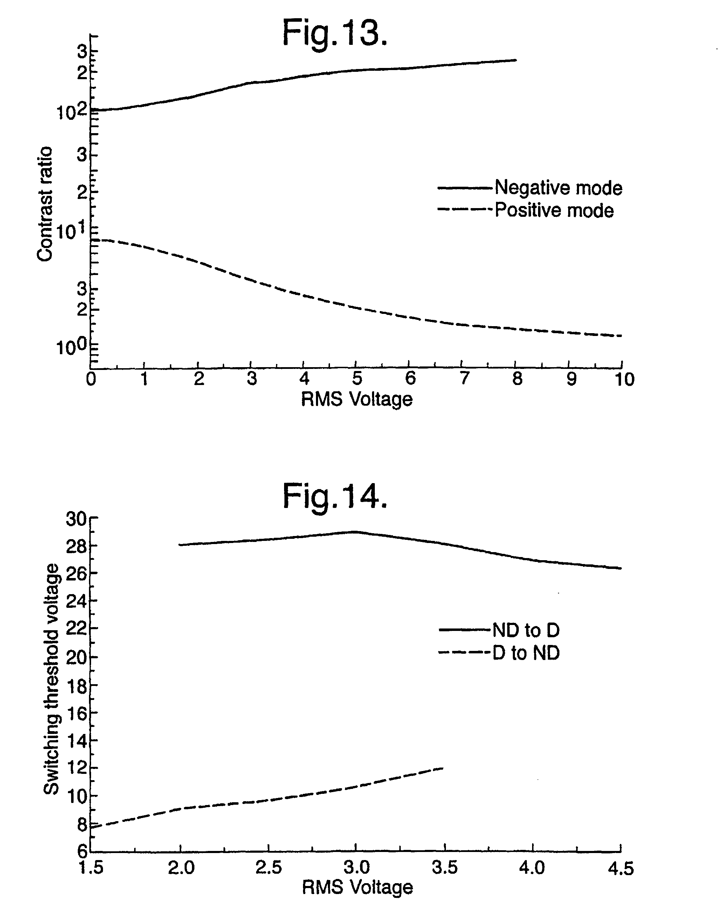

The contrast ratios (defect state transmission / continuous state transmission) are plotted in Figure 13. These results clearly show that the conventional positive mode ZBD suffers enormously from a reduced contrast with applied AC field, whereas the application of an RMS. voltage to the twisted negative mode leads to an increased contrast ratio (primarily due to the increased transmission of the defect state).

A simple estimate of the range of RMS. voltages which lead to discrimination between the two states when using multiplexed addressing is possible by measuring the switching thresholds for the two transitions as a function of applied RMS. voltage. The results for the twisted negative mode device are shown in Figure 14. These indicate that both states may be electrically distinguished for AC fields in the range 2 to 3.5 volts RMS. The contrast ratio of the positive and twisted negative ZBD devices for a typical multiplexing data voltage of 3Vrms was 4:1 and 160 : 1 respectively. With the RMS. voltage removed the respective contrast ratios were 8:1 and 95:1. These values are indicative of the large optical advantage gained by using the twisted negative ZBD of example 2 of the present invention. These advantages were combined with much improved white state and viewing angle for the twisted negative ZBD. The improved off-axis viewing characteristics are because the optical properties of the two states of example 2 are very similar to those of the Voltage Controlled Twist (VCT) WO97/39382, GB/96,078548 and In-plane switching (IPS) modes. Improvements to the viewing angle may be made using conventional .methods such as the use of additional retardation plates, or sub-pixelation.

## Claims

1. A liquid crystal device (1) comprising two cell walls (3, 4) enclosing a layer (2) of nematic or chiral nematic liquid crystal material;
   electrode structures (6, 7) on both walls;
   a surface alignment means (16, 17) on the facing surfaces of both cell walls (3, 4, 6, 7) in contact with the liquid crystal material and providing alignment of the liquid crystal molecules;
   means (13, 14) for distinguishing between the switched states of the liquid crystal material;
   **CHARACTERISED BY**
   a liquid crystal material (2) having a zero or negative dielectric anisotropy;
   a first surface alignment means (16) on one cell wall (4) that permits the liquid crystal molecules to adopt two different pretilt angles in the bulk of the material (2) adjacent the surface in substantially the same azimuthal plane;
   a second surface alignment means (17) on the other cell wall (3) giving either planar homogeneous or tilted homogeneous alignment and a single preferred alignment direction of the liquid crystal molecules, the pretilt value of the tilted alignment being less than $45°$ to that surface, and the angle between the single alignment direction and the same azimuthal plane associated with the first surface alignment (16) being substantially greater than zero; the arrangement being such that two stable liquid crystal molecular configurations can exist after suitable electrical signals have been applied (8, 9, 10, 11, 12) to the electrodes (6, 7), and one of which configurations has a liquid crystal molecular twist across the layer (2).

2. The device of claim 1 wherein the value and direction of pretilt on the second surface (3) together with the pretilt values and direction on the first surface (4) are arranged to give a uniform molecular tilt direction in the bulk of the liquid crystal material (2).

3. The device of claim 1 wherein the angle between the single alignment direction and the same azimuthal plane associated with the first surface alignment (17) is at least $45°$ to provide a molecular twist of at least $45°$ across the layer (2).

4. The device of claim 1 wherein the angle between the single alignment direction and the same azimuthal plane associated with the first surface alignment (17) is about $90°$ to provide a molecular twist of about $90°$ across the layer (2).

5. The device of claim 1 wherein the layer (2) includes an amount of cholesteric material, and the azimuthal alignment direction of the first surface (4) and that of the second surface (3) is $90°n$, where n = 1, 2, 3, ....

6. The device of claim 1 and further including a reflecting or partial reflecting mirror (15).

7. The device of claim 1 wherein the first surface alignment (16) comprises a periodic grating structure, whose the depth, pitch, shape and anchoring properties are arranged to give the liquid crystal material two different pretilts some small distance from that surface;

8. The device of claim 7 wherein the alignment grating depth (h) and pitch (w) are dimensioned to give substantially the same distortion energy to liquid crystal molecules in the two different pretilt angles.

9. The device of claim 7 wherein the alignment grating dimensions of depth (h) and pitch (w) are arranged to cooperate with any molecular twist in the layer to give substantially the same distortion energy to liquid crystal molecules in the two different pretilt angles.

**10.** The device of claim 1 wherein the first surface alignment (16) comprises a grating formed of a material, which induces a homeotropic orientation of the liquid crystal molecules with respect to the local surface direction.

**11.** The device of claim 1 wherein the first surface alignment (16) comprises a grating formed of a material, which induces a homogenous or low pretilt orientation of the liquid crystal molecules with respect to the local surface direction.

**12.** The device of claim 1 wherein the first surface alignment (16) is a grating structure having a symmetric profile with a uniform or varying shape across each pixel, or from pixel to pixel within the display, or between the pixels or in gaps between pixels.

**13.** The device of claim 1 wherein the first surface alignment (16) is a grating structure having an asymmetric profile with a uniform or varying asymmetry across each pixel, or from pixel to pixel within the display, or between the pixels or in gaps between pixels.

**14.** The device of claim 1 wherein the first surface alignment (16) is a grating structure treated to induce homeotropic orientation of the liquid crystal molecules with respect to the local surface direction.

**15.** The device of claim 1 wherein the second surface alignment (17) is a rubbed polymer surface.

**16.** The device of claim 1 wherein the second surface alignment (17) is formed by a polarised organic material layer.

**17.** The device of claim 1 wherein the second surface alignment (17) is formed by a layer of an organic material evaporated on the cell wall (3).

**18.** The device of claim 1 wherein the second surface alignment (17) is formed by a mono or bigrating layer.

**19.** The device of claim 1 and further including a surfactant on at least one cell wall (3, 4) surface to modify anchoring energy.

**20.** The device of claim 19 wherein the additional surfactant used to alter the surface properties is mixed with the liquid crystal material.

**21.** The device of claim 1 wherein the liquid crystal material (2) has a flexoelectric polarisation in its switched states.

**22.** The device of claim 1 and further including means (8, 9, 10, 11, 12) for applying unidirectional voltage pulses whereby the two different stable states are selected by a coupling between the applied electric field and the flexo-electric polarisation present in a bent or splayed liquid crystal material.

**23.** The device of claim 1 and further including means for applying electric signals at two different frequencies and wherein the nematic material is a two-frequency addressable liquid crystal material.

**24.** The device of claim 1 wherein the liquid crystal material (2) includes an amount of dichroic dye.

**25.** The device of claim 1 wherein the means for optically distinguishing between the switched states includes at least one polariser (13, 14).

**26.** The device of claim 1 and further comprising additional birefringent layers for altering the optical properties of the device in its switched states.

**Patentansprüche**

**1.** Flüssigkristallvorrichtung (1) mit zwei Zellwänden (3, 4), zwischen denen sich eine Schicht (2) aus nematischem oder chiral-nematischem Flüssigkristallmaterial befindet,
Elektrodenstrukturen (6, 7) auf beiden Wänden,
einer Oberflächenorientierungseinrichtung (16, 17) auf den gegenüberliegenden Oberflächen beider Zellwände (3, 4, 6, 7) in Kontakt mit dem Flüssigkristallmaterial zum Erzeugen einer Ausrichtung der Flüssigkristallmoleküle,

einer Einrichtung (13, 14) zum Unterscheiden zwischen den geschalteten Zuständen des Flüssigkristallmaterials, **gekennzeichnet durch**

ein Flüssigkristallmaterial (2) mit keiner oder negativer dielektrischer Anisotropie,

eine erste Oberflächenorientierungseinrichtung (16) auf einer Zellwand (4), damit die Flüssigkristallmoleküle zwei verschiedene Vorwinkel in dem Kern des Materials (2) neben der Oberfläche in im Wesentlichen derselben Azimut-Ebene annehmen können,

eine zweite Oberflächenorientierungseinrichtung (17) auf der anderen Zellwand (3) zum Erzeugen entweder einer planaren homogenen oder gewinkelten homogenen Ausrichtung und einer einzelnen bevorzugten Ausrichtung der Flüssigkristallmoleküle, wobei der Vorwinkelwert der gewinkelten Ausrichtung kleiner als 45° gegenüber der Oberfläche ist und der Winkel zwischen der einzelnen Orientierungsrichtung und derselben Azimut-Ebene, die zu der ersten Oberflächenorientierung (16) gehört, wesentlich größer als null ist; wobei der Aufbau derart ist, dass die beiden stabilen Molekularkonfigurationen des Flüssigkristalls existieren können, nachdem geeignete elektrische Signale an die Elektroden (6, 7) angelegt worden sind (8, 9, 10, 11, 12) und eine dieser Konfigurationen eine Molekularverdrillung des Flüssigkristalls über die Schicht (2) aufweist.

2. Vorrichtung nach Anspruch 1, bei der der Wert und die Richtung des Vorwinkels auf der zweiten Oberfläche (3) zusammen mit den Vorwinkelwerten und der Richtung auf der ersten Oberfläche (4) derart gewählt sind, dass sich eine gleichförmige molekulare Winkelausrichtung im Kern des Flüssigkristallmaterials (2) ergibt.

3. Vorrichtung nach Anspruch 1, bei der der Winkel zwischen der einzelnen Ausrichtung und derselben Azimut-Ebene, die zu der ersten Oberflächenorientierung (17) gehört, wenigstens 45° beträgt, um eine molekulare Verdrillung über die Schicht (2) von wenigstens 45° zu erzeugen.

4. Vorrichtung nach Anspruch 1, bei der der Winkel zwischen der einzelnen Ausrichtung und derselben Azimut-Ebene, die zu der ersten Oberflächenorientierung (17) gehört, etwa 90° beträgt, um über die Schicht (2) eine molekulare Verdrillung von etwa 90° zu erzeugen.

5. Vorrichtung nach Anspruch 1, bei der die Schicht (2) einen Anteil von cholesterischem Material enthält und die Azimut-Ausrichtung der ersten Oberfläche (4) und die der zweiten Oberfläche (3) 90° n ist, wobei n = 1, 2, 3, ... ist.

6. Vorrichtung nach Anspruch 1, die außerdem einen reflektierenden oder einen teilweise reflektierenden Spiegel (15) umfasst.

7. Vorrichtung nach Anspruch 1, bei der die erste Oberflächenorientierung (16) eine periodische Gitterstruktur umfasst, deren Tiefe, Konstante, Form und Verankerungseigenschaften derart gewählt sind, dass das Flüssigkristallmaterial (2) verschiedene Vorwinkel mit einem kleinen Abstand von der Oberfläche einschließt.

8. Vorrichtung nach Anspruch 7, bei der die Orientierungsgittertiefe (h) und -konstante (w) so dimensioniert sind, dass sich im Wesentlichen dieselbe Verdrehungsenergie für die Flüssigkristallmoleküle in den beiden verschiedenen Vorwinkeln ergibt.

9. Vorrichtung nach Anspruch 7, bei der die Orientierungsgitterdimensionen in Bezug auf Tiefe (h) und Konstante (w) so gewählt sind, dass sie mit jeder molekularen Verdrillung in der Schicht kooperieren, so dass sich im Wesentlichen dieselbe Verdrehungsenergie für die Flüssigkristallmoleküle in den beiden verschiedenen Vorwinkeln ergibt.

10. , Vorrichtung nach Anspruch 1, bei der die erste Oberflächenorientierung (16) ein Gitter aus einem Material umfasst, das eine homeotrope Orientierung der Flüssigkristallmoleküle in Bezug auf die lokale Oberflächenrichtung bewirkt.

11. Vorrichtung nach Anspruch 1, bei der die erste Oberflächenorientierung (16) ein Gitter aus einem Material umfasst, das eine homogene Orientierung oder Orientierung der Flüssigkristallmoleküle mit niedrigem Vorwinkel in Bezug auf die lokale Oberflächenrichtung bewirkt.

12. Vorrichtung nach Anspruch 1, bei der die erste Oberflächenorientierung (16) eine Gitterstruktur mit einem symmetrischen Profil mit einer gleichförmigen oder variierenden Form über jedes Pixel oder von Pixel zu Pixel innerhalb der Anzeige oder zwischen den Pixeln oder in Lücken zwischen den Pixeln ist.

13. Vorrichtung nach Anspruch 1, bei der die erste Oberflächenorientierung (16) eine Gitterstruktur mit einem asymmetrischen Profil mit einer gleichförmigen oder variierenden Asymmetrie über jedes Pixel oder von Pixel zu Pixel innerhalb der Anzeige oder zwischen den Pixeln oder in Lücken zwischen den Pixeln ist.

14. Vorrichtung nach Anspruch 1, bei der die erste Oberflächenorientierung (16) eine Gitterstruktur ist, die behandelt wurde, um die Flüssigkristallmoleküle mit Bezug auf die lokale Oberflächenrichtung homeotrop zu orientieren.

15. Vorrichtung nach Anspruch 1, bei der die zweite Oberflächenorientierung (17) eine geriebene Polymeroberfläche ist.

16. Vorrichtung nach Anspruch 1, bei der die zweite Oberflächenorientierung (17) durch eine polarisierte Schicht aus organischem Material erzeugt wird.

17. Vorrichtung nach Anspruch 1, bei der die zweite Oberflächenorientierung (17) aus einer Schicht aus organischem Material gebildet wird, das auf die Zellwand (3) aufgedampft wurde.

18. Vorrichtung nach Anspruch 1, bei der die zweite Oberflächenorientierung (17) durch eine Einzel- oder Doppelgitterschicht gebildet wird.

19. Vorrichtung nach Anspruch 1, die außerdem ein oberflächenaktiver Stoff auf der Oberfläche wenigstens einer Zellwand (3, 4) umfasst, um die Verankerungsenergie zu modifizieren.

20. Vorrichtung nach Anspruch 19, bei der der zusätzliche oberflächenaktive Stoff verwendet wird, um die Oberflächeneigenschaften zu verändern, und er mit den Flüssigkristallmaterial gemischt wird.

21. Vorrichtung nach Anspruch 1, bei der das Flüssigkristallmaterial (2) eine flexo-elektrische Polarisation in seinen geschalteten Zuständen aufweist.

22. Vorrichtung nach Anspruch 1, die außerdem Einrichtungen (8, 9, 10, 11, 12) zum Anlegen von unidirektionalen Spannungspulsen umfasst, wobei die beiden verschiedenen stabilen Zustände durch Kopplung zwischen dem angelegten elektrischen Feld und der flexo-elektrischen Polarisation in einem gebogenen oder schrägen Flüssigkristallmaterial gewählt werden.

23. Vorrichtung nach Anspruch 1, die außerdem Einrichtungen zum Anlegen elektrischer Signale bei zwei verschiedenen Frequenzen umfasst, wobei das nematische Material ein bei zwei Frequenzen adressierbares Flüssigkristallmaterial ist.

24. Vorrichtung nach Anspruch 1, bei der das Flüssigkristaflmaterial (2) einen Anteil von dichroischem Farbstoff enthält.

25. Vorrichtung nach Anspruch 1, bei der die Einrichtung für die optische Unterscheiden zwischen den geschalteten Zuständen wenigstens einen Polarisator (13, 14) umfasst.

26. Vorrichtung nach Anspruch 1, die außerdem zusätzliche Doppelbrechungsschichten umfasst zum Verändern der optischen Eigenschaften der Vorrichtung in ihren geschalteten Zuständen.

**Revendications**

1. Un appareil à cristaux liquides (1) comprenant deux parois cellulaires (3, 4) renfermant une couche (2) de matériau de cristal liquide nématique ou nématique chiral ;
des structures d'électrodes (6, 7) sur les deux parois ;
des moyens d'alignement de surface (16, 17) sur les surfaces se faisant face des deux parois cellulaires (3, 4, 6, 7) en contact avec le matériau de cristal liquide et fournissant l'alignement des molécules de cristal liquide ;
des moyens (13, 14) pour distinguer entre les états commutés du matériau de cristal liquide ;
**CARACTERISE PAR**
un matériau de cristal liquide (2) ayant une anisotropie diélectrique à zéro ou négative ;
des premiers moyens d'alignement de surface (16) sur une paroi cellulaire (4) qui permettent aux molécules de cristal liquide d'adopter deux angles différents de préinclinaison dans le volume du matériau (2) adjacent à la surface dans globalement le même plan azimutal ;

des seconds moyens d'alignement de surface (17) sur l'autre paroi cellulaire (3) donnant soit un alignement homogène planaire ou homogène incliné et une seule direction d'alignement préférée des molécules de cristal liquide, la valeur de préinclinaison de l'alignement incliné étant à moins de 45° par rapport à cette surface, et l'angle entre la seule direction d'alignement et le même plan azimutal associé au premier alignement de surface (16) étant globalement supérieur à zéro ; l'agencement étant tel que deux configurations moléculaires stables de cristal liquide peuvent exister après l'application de signaux électriques appropriés (8, 9, 10, 11, 12) aux électrodes (6, 7), une des configurations possédant une torsion moléculaire de cristal liquide à travers la couche (2).

2. L'appareil de la revendication 1 dans lequel la valeur et la direction de la pré-inclinaison sur la seconde surface (3) conjointement aux valeurs et direction de pré-inclinaison sur la première surface (4) sont disposées afin de donner une direction d'inclinaison moléculaire uniforme dans le volume du matériau de cristal liquide (2).

3. L'appareil de la revendication 1 dans lequel l'angle entre la seule direction d'alignement et le même plan azimutal associé au premier alignement de surface (17) est au moins de 45° afin de fournir une torsion moléculaire d'au moins 45° à travers la couche (2).

4. L'appareil de la revendication 1 dans lequel l'angle entre la seule direction d'alignement et le même plan azimutal associé au premier alignement de surface (17) est d'environ 90° afin de fournir une torsion moléculaire d'environ 90° à travers la couche (2).

5. L'appareil de la revendication 1 dans lequel la couche (2) inclut une quantité de matériau cholestérique, et la direction d'alignement azimutale de la première surface (4) et celle de la seconde surface (3) est de 90°n, ou n = 1, 2, 3, ...

6. L'appareil de la revendication 1 incluant en outre un réflecteur total ou partiel (15).

7. L'appareil de la revendication 1 dans lequel le premier alignement de surface (16) comprend une structure de réseau périodique, dont la profondeur, le pas, la forme et les propriétés d'ancrage sont disposés afin de donner au matériau de cristal liquide deux pré-inclinaisons différentes à une petite distance de cette surface.

8. L'appareil de la revendication 7 dans lequel la profondeur (h) et le pas (w) du réseau d'alignement sont dimensionnés pour donner globalement la même énergie de distorsion aux molécules de cristal liquide dans les deux angles de préinclinaison différents.

9. L'appareil de la revendication 7 dans lequel les dimensions de profondeur (h) et de pas (w) du réseau d'alignement sont disposées afin de coopérer avec toute torsion moléculaire dans la couche pour donner globalement la même énergie de distorsion aux molécules de cristal liquide dans les deux angles de préinclinaison différents.

10. L'appareil de la revendication 1 dans lequel le premier alignement de surface (16) comprend un réseau formé d'un matériau, qui entraîne une orientation homéotrope des molécules de cristal liquide par rapport à la direction de surface locale.

11. L'appareil de la revendication 1 dans lequel le premier alignement de surface (16) comprend un réseau formé d'un matériau, qui entraîne une orientation de préinclinaison homogène ou peu importante des molécules de cristal liquide par rapport à la direction de surface locale.

12. L'appareil de la revendication 1 dans lequel le premier alignement de surface (16) est une structure de réseau ayant un profil symétrique avec une forme régulière ou variée à travers chaque pixel, ou de pixel en pixel sur l'écran, ou entre les pixels ou dans des espaces entre les pixels.

13. L'appareil de la revendication 1 dans lequel le premier alignement de surface (16) est une structure de réseau ayant un profil asymétrique avec une asymétrie uniforme ou variée à travers chaque pixel, ou de pixel en pixel sur l'écran, ou entre les pixels ou dans des espaces entre les pixels.

14. L'appareil de la revendication 1 dans lequel le premier alignement de surface (16) est une structure de réseau traitée pour entraîner une orientation homéotrope des molécules de cristal liquide par rapport à la direction de surface locale.

**15.** L'appareil de la revendication 1 dans lequel le second alignement de surface (17) est une surface de polymère polie.

**16.** L'appareil de la revendication 1 dans lequel le second alignement de surface (17) est formé d'une couche de matériau organique polarisé.

**17.** L'appareil de la revendication 1 dans lequel le second alignement de surface (17) est formé d'une couche d'un matériau organique évaporé sur la paroi cellulaire (3).

**18.** L'appareil de la revendication 1 dans lequel le second alignement de surface (17) est formé d'une couche mono- ou bi-réseau.

**19.** L'appareil de la revendication 1 incluant en outre un agent de surface sur au moins une surface de paroi cellulaire (3, 4) pour modifier l'énergie d'ancrage.

**20.** L'appareil de la revendication 19 dans lequel l'agent de surface supplémentaire utilisé pour altérer les propriétés de surface est mélangé au matériau de cristal liquide.

**21.** L'appareil de la revendication 1 dans lequel le matériau de cristal liquide (2) possède une polarisation flexoélectrique dans les états commutés.

**22.** L'appareil de la revendication 1 incluant en outre des moyens (8, 9, 10, 11, 12) pour appliquer des impulsions de voltage unidirectionnelles par lesquelles les deux états stables différents sont sélectionnés par un couplage entre le champ électrique appliqué et la polarisation flexoélectrique présente dans un matériau de cristal liquide fléchi ou étendu.

**23.** L'appareil de la revendication 1 incluant en outre des moyens pour appliquer des signaux électriques à deux fréquences différentes et dans lequel le matériau nématique est un matériau de cristal liquide adressable à deux fréquences.

**24.** L'appareil de la revendication 1 dans lequel le matériau de cristal liquide (2) inclut une quantité de colorant dichroïque.

**25.** L'appareil de la revendication 1 dans lequel les moyens pour distinguer de façon optique les états commutés incluent au moins un polarisateur (13, 14).

**26.** L'appareil de la revendication 1, comprenant en outre des couches biréfringentes supplémentaires pour altérer les propriétés optiques de l'appareil dans ses états commutés.

# Fig.1a.

# Fig.5.

# Fig.1b.

# Fig.2a.

Prior Art

(i)                    (ii)

# Fig.2b.

Prior Art

(i)                    (ii)

# Fig.3.

(i)          (ii)

# Fig.4.

(i)          (ii)

# Fig.6a.

# Fig.6b.

# Fig.7.

# Fig.8.

# Fig.9.

# Fig.10.

## Fig.11.

## Fig.12.

# Fig.13.

# Fig.14.

## Fig.15.